(19) Europäisches Patentamt
European Patent Office
Office européen des brevets

(11) **EP 3 788 885 A1**

(12) **EUROPEAN PATENT APPLICATION**

(43) Date of publication:
**10.03.2021 Bulletin 2021/10**

(51) Int Cl.:
*A23J 1/14* (2006.01)        *A23L 11/00* (2021.01)
*A23L 11/40* (2021.01)       *A23L 15/00* (2016.01)

(21) Application number: **20194056.6**

(22) Date of filing: **02.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2019   US 201962895471 P**

(71) Applicant: **Prairie Tide Diversified Inc.**
**Saskatoon, SK S7J 0R1 (CA)**

(72) Inventors:
• **REANEY, Martin John**
  **Saskatoon, Saskatchewan**
  **S7H 4V9 (CA)**
• **MUSTAFA, Rana**
  **Saskatoon, Saskatchewan**
  **S7K 7J3 (CA)**

(74) Representative: **Engstle, Verena**
**Meissner Bolte**
**Patentanwälte Rechtsanwälte**
**Partnerschaft mbB**
**Bankgasse 3**
**90402 Nürnberg (DE)**

(54) **AQUAFABA COMPOSITION AND METHODS OF MANUFACTURE**

(57)    There is disclosed a method of producing a standardized whey composition, comprising steeping seed an identity preserved pulse cultivar selected from the genera for a predetermined time at a predetermined temperature. Optionally this seed is subjected to processed by milling and fractionation or heating and fractionation to produce a series of improved food ingredients that uniformly stabilize foams and emulsions.

FIG. 1

EP 3 788 885 A1

**Description**

**FIELD OF THE INVENTION**

The present disclosure relates to aquafaba, and more generally to novel aquafaba compositions and methods of manufacture.

**BACKGROUND**

Aquafaba is a viscous liquid obtained from cooked chickpeas or other pulses (edible legume seeds) and has gained popularity in the vegan community to replace eggs and milk in many vegan foods. Aquafaba was initially reported by Joel Roessel as a foaming agent to replace egg white (Revolution végétale, 2014). This liquid is prepared by separating the viscous liquid from canned or pressure-cooked chickpeas by filtration. Aquafaba has many highly desirable functional properties such as foaming, emulsifying, binding and thickening, (Aquafaba, 2016) that allow substitution for egg white or whole eggs in many food recipes such as meringue (Stantiall et al., 2018), mayonnaise, cakes, butter and whipped cream, etc. However, different pulse varieties and variations in production methods have produced aquafaba of varying quality with unpredictable properties and inconsistent results.

What is therefore needed are improved aquafaba compositions and methods of production that provide more consistent and predictable properties.

**SUMMARY**

The present disclosure relates to novel aquafaba compositions and methods of manufacture.

In an aspect, there is provided a method for producing aquafaba based on testing the properties of pulses (edible legume seeds) and the process for preparing, cooking, straining and filtering in order to produce standardized aquafaba with consistent quality and predictable properties for use in foods as an egg replacement.

In another aspect, various embodiments are directed to the improvement of aquafaba compositions to more fully replace eggs in different food applications in predictable ways and achieve superior performance.

Further embodiments of the invention are directed to the concentration and modification of aquafaba compositions made from pulses (edible legume seeds) having consistent and predictable characteristics for specific food applications, such as plant-based soy milk, baked goods, meringue, mayonnaise, salad dressing and dips.

In an embodiment, a method of producing a standardized aquafaba composition, comprises

steeping an identity preserved pulse cultivar for a predetermined time at a predetermined temperature;

wet heat treating the steeped seed for a predetermined time at a predetermined temperature and pressure; and

separating the liquid (aquafaba) from the seed and concentrated for use as a foaming and emulsifying agent.

In an embodiment, a method of producing a standardized aquafaba and whey composition, comprises

steeping an identity preserved pulse cultivar for a predetermined time at a predetermined temperature;

blending the steeped identity preserved pulse cultivar with a liquid base to produce a slurry;

centrifuging the slurry to produce a milk and an okara pulp;

boiling the milk and cooling to a predetermined temperature to form a curd and whey; and

separating the whey from the curd for use as a foaming and emulsifying agent. In an embodiment, the method further comprises

producing an aquafaba foam from the identity preserved pulse cultivar whey;

measuring a foam capacity and a foam stability of the aquafaba foam produced from the identity preserved pulse cultivar whey; and

comparing the measured foam capacity and foam stability of the aquafaba foam to a reference standard to determine suitability of the identity preserved pulse cultivar for a given aquafaba use.

In an embodiment, the method further comprises determining the germplasm of the identity preserved pulse cultivar for identifying other pulse cultivars within a genus with similar properties.

In an embodiment, the method further comprises conducting spectroscopic testing of the identity preserved pulse cultivar.

In an embodiment, the spectroscopic testing comprises NMR spectra testing for undesirable compounds.

In an embodiment, the undesirable compounds are vicine and covicine.

In an embodiment, the spectroscopic testing comprises NMR spectral analysis for determining protein concentrations.

In an embodiment, the method further comprises utilizing the spectral analysis to blend the whey of two or more identity preserved pulse cultivars to achieve a standard concentration of protein.

In a further embodiment, a standardized aquafaba and whey composition produced from the method according to any of the embodiments as previously described is provided.

In this respect, before explaining at least one embodiment of the invention in detail, it is to be understood that the invention is not limited in its application to the details of construction and to the arrangements of the components set forth in the following description or the examples provided therein, or illustrated in the drawings. Therefore, it will be appreciated that a number of variants and modifications can be made without departing from the teachings of the disclosure as a whole. Therefore, the present invention is capable of other embodiments and of being practiced and carried out in various ways. Also, it is to be understood that the phraseology and terminology employed herein are for the purpose of description and should not be regarded as limiting.

BRIEF DESCRIPTION OF THE DRAWINGS

FIG. 1 shows an illustrative process for forming aquafaba in accordance with an embodiment.

FIGS. 2A and 2B show foam capacity and form stability characteristics, respectively, of aquafaba prepared from various types of pulses (edible legume seeds).

FIG. 3 shows a representative $^1$H-NMR Spectrum of the total region of aquafaba in accordance with an embodiment.

FIGS. 4A and 4B show spectrum diagrams of aquafaba compositions in accordance with an embodiment.

FIGS. 5A- 5C show NMR spectra for faba bean compositions in accordance with an embodiment.

FIG. 6 shows another illustrative process for forming an aquafaba composition in accordance with an embodiment.

FIG. 7 shows an illustrative design and construction of a foam separator in accordance with an embodiment.

FIGS. 8A and 8B show illustrative foam stability of chickpea whey (A) and egg white (B) based on whipping time.

FIG. 9 shows an illustrative comparison of foam capacity between egg white and aquafaba based on whipping time.

FIG. 10 shows an illustrative photograph comparing egg white foam and aquafaba foam.

FIG. 11 shows a photograph comparing cake baked using egg white and cake baked using aquafaba.

FIG. 12A shows a photograph comparing egg white icing and aquafaba icing.

FIG 12B shows a photograph comparing egg white meringue to aquafaba meringue.

FIG. 13 shows a schematic block diagram of a generic computing system in accordance with an embodiment.

In the drawings, embodiments are illustrated by way of example. It is to be expressly understood that the description and drawings are only for the purpose of illustration and as an aid to understanding and are not intended as describing the accurate performance and behavior of the embodiments and a definition of the limits of the invention.

DETAILED DESCRIPTION

As noted above, the present disclosure relates to novel aquafaba compositions and methods of manufacture.

In its dried form, aquafaba is a fine white flavorless powder containing protein and polysaccharides. In this dried form no preservatives or additives are required but the addition of said compounds with the aquafaba of this invention is obvious to those skilled in the art. In a preferred embodiment, the aquafaba powder is typically dried then milled or processed by spray drying such that >95% passes through a 90 $\mu$m screen, 170 mesh. Those skilled in the art will recognize that finer and coarser products are possible for specific applications. The preferred protein content is about 27 % (Dry matter basis).

When the aquafaba powder is dispersed in water (in a preferred embodiment about 2.5-3 % w/w aquafaba powder to water), and then whipped (in a preferred embodiment for 15 minutes), it produces a foam approximately equal in volume and stability to an egg white foam. By way of example, an aquafaba preparation of 10 wt% oil-in-aquafaba produces nanoemulsions with added oil that are white in color and stable for more than 6 months (at 4°C).

Many food formulations, particularly baked goods, dairy desserts, noodles and pasta, include egg to provide softness, colour and texture (Sadahira et al., 2018). Egg white has excellent surface-active properties. Eggs bind ingredients (Stadelman & Schmeider, 2002), act as emulsifiers, and form foams when whipped and coagulate when heated (Mine, 1995; Foegeding et al.,2006). The foaming ability of egg white is needed for preparing mousses, and in baking applications, especially sponge and angel cake (Stadelman & Schmeider, 2002). The emulsification properties of egg white are advantageous in hollandaise, mayonnaise, salad dressing and other sauces. Furthermore, egg white is used in meringues and confections to minimize sugar crystallization, in icings to ensure creamy smoothness, and in baking to improve whiteness and texture (Stadelman & Schmeider, 2002; Sadahira et al., 2016).

However, due to increasing costs, health considerations such as cholesterol intake, dietary choices (i.e. vegans and vegetarians), egg allergies (Kemp, 2007) and environmental concerns (Janssen et al., 2016), egg consumption has been declining. Consumers are actively searching for healthier egg alternatives, but do not wish to sacrifice taste, appearance and functional properties contributed by eggs to food.

Many studies have been published describing possible replacements for egg in food products, (Arozarena et al., 2001; Kohrs et al., 2010; Shao et al., 2015, Rahmati & Tehrani, 2014, Tan et al., 2015, Lee et al., 1993; Myhara & Kruger, 1998; Raeker & Johnson, 1995). However, these studies were unable to identify a substance which could completely replace the functionality of egg including its contribution to producing a stable foam (Stadelman & Schmeider, 2002). The unique foaming, emulsifying and heat coagulation properties of egg white protein are difficult to duplicate using protein from other sources, even with the inclusion of additives such as hydrocolloids. The search for a suitable egg replacement has therefore proven to be challenging (Ashwini et al., 2009).

Traditionally, egg replacements have been produced from a source of protein - often from an animal source such a whey protein, and a vegetable oil. However, more recently, pulse flour and pulse protein isolates have been investigated for their foaming and emulsifying properties in vegan and gluten-free food products. For example, it has been found that lentil protein as an egg replacement produces acceptable angel food cakes and muffins, but with slight increases in hardness and chewiness (Jarpa-Parra et al., 2017). Incorporation of chickpea flour combined with other hydrocolloids has also been used to produce gluten-free bread and snacks (Rachwa-Rosiak et al., 2015; Herranz et al., 2016). Heat (Xu et al., 2017) and fermentation (Chandra-Hioe et al., 2016) were investigated as treatments to improve chickpea flour functionality, but all such treatments decreased emulsification and foaming ability.

The difficulty in development of egg replacement compositions that fully replace eggs is reflected in the patent literature where numerous inventions are only partly capable of replacing eggs or could only be used for some specific applications.

For example, US 3,864,500, and US 4,103,038, describe a process for preparing an egg yolk substitute comprising non-elastic protein, oil and salt.

US 4,029,825 and US 4,267,100 describe a process for forming an egg white substitute made from modified whey protein.

US 4,103,038 describes an egg replacement composition comprising whey protein, fat and lecithin. This product is not useful for vegan foods as it contains animal protein and lecithin derived from eggs.

US 4,072,764 describes an egg yolk replacement made from soy flour, oil and lecithin. This composition does not have the function of whole eggs.

US 4,214,010 describes replacement of whole eggs in custard using a composition comprising whey protein and shortening, (animal fat).

US 4,293,574 and US 4,302,474 describe a process for a mayonnaise-like product using protease treated soy protein, an emulsifier, oil, vinegar and salt.

US 4,360,537 describes lipoprotein emulsions that can partially replace eggs.

US 4,409,248 describes modified vegetable protein isolates that can be used to replace egg albumin.

US 5,718,940 provide a method of making a vegetarian egg yolk comprising flour, vegetable oil, fried beans and cheese.

US 6,878,394 and US 7,442,400 describe egg replacer compositions made from protein, oil and steroyl lactylate.

US 8,287,930 describes a free-flowing egg replacement comprising wheat protein, propylene glycol, glycerin, and lecithin.

US 10,321,705 describes a mung bean protein isolate that when mixed with phosphate has some egg-like properties.

Unissued US patent application US 2014/0193565 A1 describes a multi-purpose ingredient for baking and other food uses to replace eggs called Optisol. This product comprises protein and a flaxseed fraction that provides gum, starch, fibre, carbohydrates and fat. The protein may be whey protein or a plant protein.

Unissued US patent application US 2014/0356507 A1 describes a plant-based egg substitute that is primarily comprised of some type of legume flour such as garbanzo beans (chickpea) or yellow pea that additionally comprises some plant gums, (guar gum, xanthan gum), starch and carboxy-methyl cellulose and plant vegetable oils. Although this product comprises chickpea flour it is not equivalent to aquafaba.

In summary, despite all of the work that has taken place to develop egg replacements, the desirable properties of egg whites have proven hard to duplicate for all egg white uses and applications. Prior art egg substitutes are therefore useful for only a limited number of products. Due to these limitations, in many instances these products do not replace eggs entirely and may instead be used to extend the volume of the egg product by mixing. Additionally, many of the protein compositions include animal protein or fats, thus being unacceptable for vegan uses.

To address these various limitations of prior efforts, the inventors have developed a novel aquafaba composition and method of production which provides a suitable egg white substitute for virtually all egg white applications used in processed foods.

Aquafaba functional properties vary considerably depending on the pulse composition, steeping time, temperature, pressure, cooking time and genotype (Shim et al., 2018, Mustafa et al, 2018). For example, chickpeas from different commercially available brands, when prepared under differing conditions, lead to differences in the quality and performance. Variations in processing conditions result in inconsistent and irreproducible aquafaba quality, stability and foaming properties, thus making the task of maintaining consistent food processing quality very difficult.

Unissued US patent application 2016/0309732 A1 by Gugger et al describes a legume-based dairy substitute and food products that contain it. The product comprises a soybean milk made from hydrated seeds heated under pressure in the presence of amylase to remove starch that is blended with vegetable oil. The application includes a functional comparison (example 6) to aquafaba.

US patent application 2018/0042278 A1 by Brahimsha et al describes a protein enriched hummus composition made by adding additional protein to the chickpea product to enhance texture and functionality that additionally comprises a brine solution that includes aquafaba.

US patent application 2018/0303105 A1 by Desjardins-Lavisse et al describes a food dough and method of production that includes, (i.e. claim 5) incorporation of aquafaba.

US patent application 2019/0045807 A1 by Shah et al describes an air-stable edible foam comprising at least one proteinaceous whipping agent from a plant source that may be aquafaba, (claim 5).

US patent application 2019/0200662 A1 by Barewal et al describes food products for individuals with chewing and swallowing difficulties that comprises a foamed aquafaba network to add strength and viscosity to the product.

US 3,669,883 describes a foam fractionation system used to remove fibers, colloids and hogh molecular weight contaminants from aquarium water.

US 5,484,525 describes a foam fractionation system used to remove contaminants (organic waste) and purify water.

All of the applications cited above refer to aquafaba and provide possible uses in foods, but none of them describe methods to produce an aquafaba composition, or to improve or concentrate or standardize aquafaba for intended applications.

In an embodiment, the present invention provides methods for the production of aquafaba compositions with improved functional aspects of stability, consistency, and predictability in numerous and diverse food products.

In a further embodiment of the invention, methods are provided to the formation of a concentrated aquafaba composition with altered profile of ingredients that enhances the performance and more closely replicates the diverse abilities of eggs.

In a still further embodiment of the present invention to provide examples of the use of the aquafaba compositions in the preparation of food products such as sponge cake, meringue, icing, salad dressing, dips, chickpea milk, vegan cheese substitute, vegan ice cream, and mayonnaise.

Example 1: standard production of aquafaba from 14 pulses by pressure cooking

To establish baseline data for foam capacity and foam stability the inventors conducted extensive experiments with a wide variety of pulses.

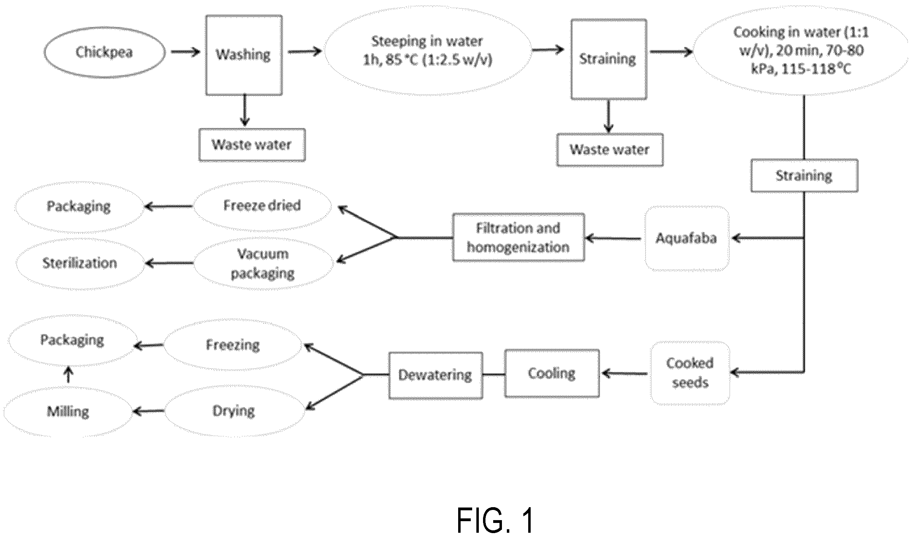

FIG. 1 shows an illustrative process for forming aquafaba in accordance with an embodiment, which was used for these experiments. Samples of pulse seed (100 g) derived from fourteen species were weighed and submersed in water (1:2.5; w/v) and held at 4°C for 16 hours. During this time, the seed swelled and softened as it imbibed water. After this period the seed was placed onto a screen and any excess water was allowed to drain. Optionally the seed may be washed before proceeding. The drained seed was then mixed with water (1:1; w/v) in 250 mL sealed glass jars and cooked for 20 min in a pressure cooker at 70-80 kPa (115-118 °C). After cooking, the jars were maintained at room temperature for 24h. The liquid resulting from cooking (aquafaba) was separated from the seed using a stainless-steel mesh kitchen strainer. A representative sample of aquafaba was taken for analysis of physical and functional properties and other samples of aquafaba and cooked seeds were freeze dried for further analysis.

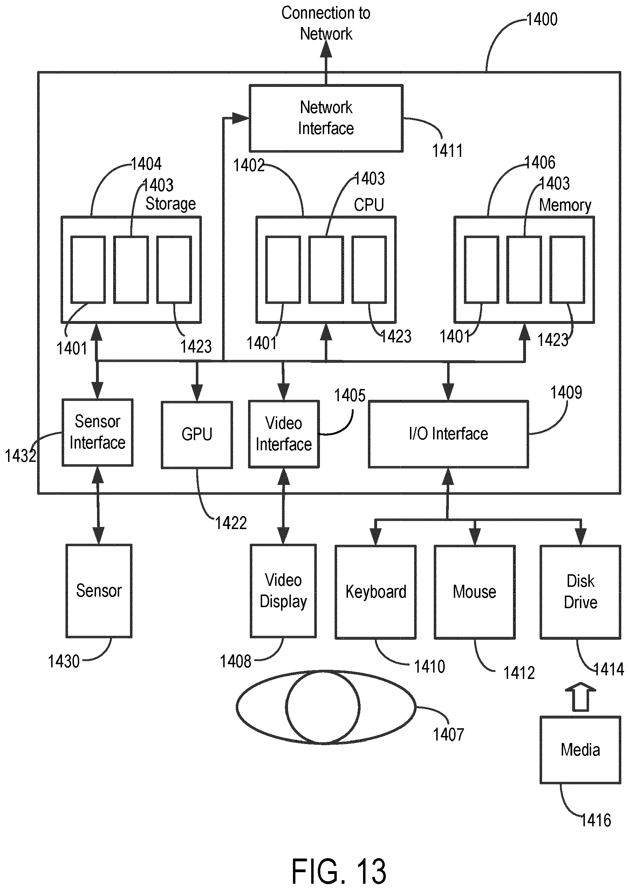

It will be appreciated that the process illustrated in FIG. 1 and described above may be automated by a process control system embodied on a computer system (see FIG. 13 below), such that the parameters may be controlled within tight tolerances required for maintaining consistent quality. The parameters include seed weight and moisture, temperature, pressure, time, and water to seed ratio, aquafaba density, viscosity and total dry materials. The process control system may utilize various sensors for detecting environmental conditions and collecting readings of various operating parameters during aquafaba production in accordance with specified operating parameters. Upon detection of any anomalies, the process control system is adapted to make any adjustments as may be necessary to bring the operating parameters back within normal ranges as specified. The process control system may also be adapted to customize the operating parameters for each specific type of pulse, based on previously determined data and any modifications that may be required to produce aquafaba having desired specified properties.

While illustrative parameter settings are provided, it will be appreciated that these parameters may be varied in accordance with different embodiments of the present invention. For example, utilizing longer and shorter steeping times and higher and lower steeping temperature to swell the seed are possible. The cooking additives, time, pressure and temperature can also be varied.

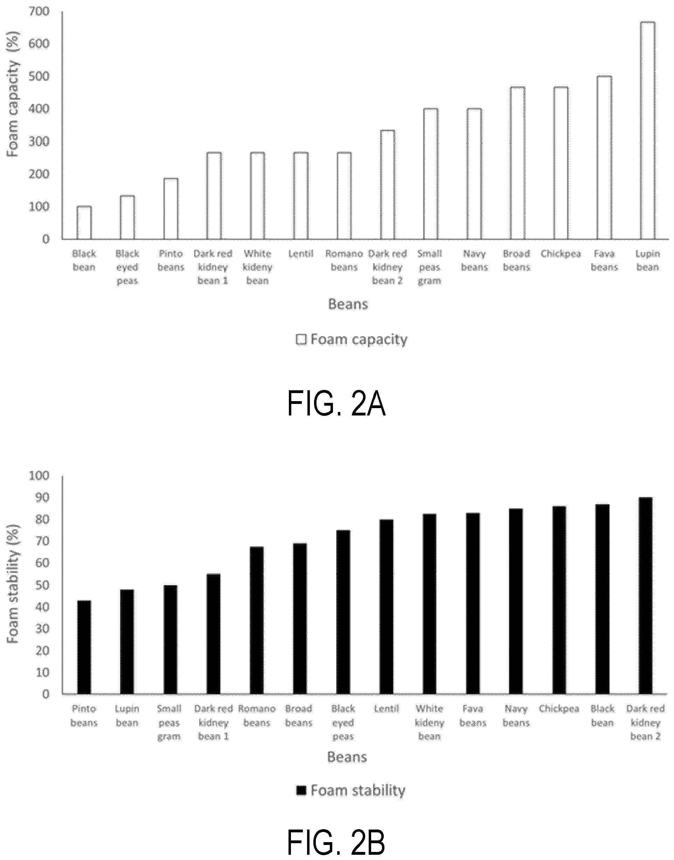

Foam capacity and foam stability as determined by these experiments are presented in FIG. 2A and FIG. 2B respectively. From the results shown in these charts, it is clear that there are significant effects of genetic background on the both foam capacity and foam stability. Ideally, an egg white replacement should achieve both high foam capacity and stability, and, therefore, the pulse varieties that show the largest foam capacity and foam stability should be favored for selection. Faba bean, chickpea, navy bean and broad bean all provided both higher than average foam capacity and foam stability.

Based on these experiments, it is possible to select pulse germplasm and identify other pulses that produce superior foam when processed as shown and described above with reference to FIG. 1. Selection of the pulse species to be used in aquafaba production that will achieve the desired properties can thus be greatly simplified.

Example 2: Production of aquafaba from an identity preserved pulse I (chickpea)

Aquafaba was prepared from five chickpea cultivars by cooking in a pressure vessel as described in example 1. However, it will be appreciated that the parameters used in this illustrative example may be varied. For example, utilizing longer and shorter steeping times and higher and lower steeping temperature to swell the seed are possible. The cooking additives, time, pressure and temperature can also be varied.

Emulsion capacity and emulsion stability were determined for the samples using standard methods. The effects of genotype within a species on both of these properties is less pronounced than between genotypes, as shown in Table 1 below.

Table 1

| | ES | EC | HSW | SCI | ED | SSA | WSA | Carboh. | AQ moisture | Protein | Fibre | Fat | Ash | $H_{max}$ | $H_{rate}$ |
|---|---|---|---|---|---|---|---|---|---|---|---|---|---|---|---|
| AQ yield | - | - | $0.47^{ns}$ | $0.09^{ns}$ | $0.42^{ns}$ | - | - | $-0.29^{ns}$ | $0.71^{ns}$ | $-0.48^{ns}$ | | $0.71^{ns}$ | $-092^*$ | - | $0.32^{ns}$ |
| ES | | $0.40^{ns}$ | - | - | - | - | $0.25^{ns}$ | $-0.37^{ns}$ | $-0.91^*$ | $-0.58^{ns}$ | - | - | $0.82^{ns}$ | $0.39^{ns}$ | - |
| EC | | | $0.02^{ns}$ | $0.20^{ns}$ | $0.01^{ns}$ | - | - | $0.47^{ns}$ | $-0.34^{ns}$ | $0.39^{ns}$ | - | - | - | - | - |
| HSW | | | | - | $0.97^{**}$ | - | - | $-0.39^{ns}$ | $-0.28^{ns}$ | $0.24^{ns}$ | - | $0.87^{ns}$ | - | - | - |
| SCI | | | | | $0.15^{ns}$ | $0.30^{ns}$ | $0.75^{ns}$ | $0.24^{ns}$ | $0.26^{ns}$ | $-0.26^{ns}$ | $0.95^*$ | - | - | - | - |
| ED | | | | | | - | - | $-0.48^{ns}$ | $-0.28^{ns}$ | $0.21^{ns}$ | - | $0.74^{ns}$ | - | - | - |
| SSA | | | | | | | $0.80^{ns}$ | $0.25^{ns}$ | $0.19^{ns}$ | $-0.21^{ns}$ | $0.57^{ns}$ | $-0.96^*$ | $0.55^{ns}$ | $0.58^{ns}$ | - |
| WSA | | | | | | | | $-0.20^{ns}$ | $0.02"$ | $-0.04^{ns}$ | $0.90^*$ | $-0.90^*$ | $0.45^{ns}$ | $0.12^{ns}$ | - |
| Carbohydrate | | | | | | | | | $0.59^{ns}$ | $-0.85^{ns}$ | - | - | - | - | $0.27^{ns}$ |
| AQ moisture | | | | | | | | | | $-0.72^{ns}$ | $0.22^{ns}$ | $0.04^{ns}$ | - | - | $0.43^{ns}$ |
| Protein | | | | | | | | | | | - | $0.01^{ns}$ | $0.65^{ns}$ | $0.30^{ns}$ | $0.09^{ns}$ |
| Fibre | | | | | | | | | | | | - | $0.02^{ns}$ | - | - |
| Fat | | | | | | | | | | | | | - | - | $0.23^{ns}$ |
| Ash | | | | | | | | | | | | | | $0.74^{ns}$ | $0.01^{ns}$ |
| $H_{max}$ | | | | | | | | | | | | | | | $0.60^{ns}$ |

AQ, aquafaba; ES, emulsion stability; EC, emulsion capacity; HSW, 100 seed weight; ED, equivalent dimension; SCI, seed coat incidence; SSA, specific surface area; WSA, weight of seed coat per surface area; $H_{max}$, max hydration capacity; $H_{rate}$, initial hydration rate.

Ideally, an emulsifier should achieve both high emulsion capacity and stability. For example, the chickpea cultivars CDC Leader and CDC Orion provided aquafaba with both higher than average emulsion capacity and emulsion stability.

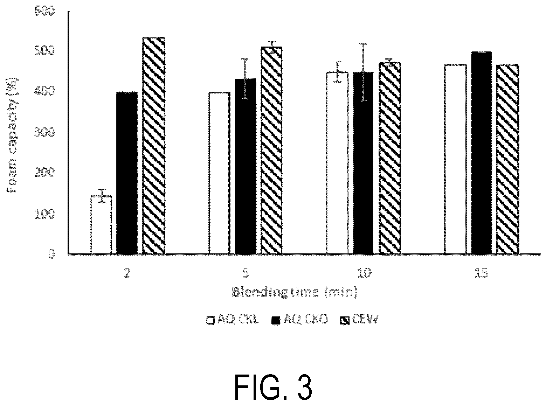

The chart shown in FIG. 3 provide an illustrative example of the effect of the parameters on aquafaba properties. For example, when changing the blending time from 2, 5, 10 and 15 minutes, the foam capacity of aquafaba produced from CDC Leader and CDC Orion increased 3.2 and 1.2 times reaching 87 and 93% (respectively) of egg white foaming capacity.

It will be appreciated that it would be possible to screen other chickpea germplasm and identify other pulses within a genus that produce superior emulsions when processed as described above with respect to FIG. 1. Judicious selection of chickpea cultivars for use in aquafaba production can thus produce aquafaba that achieves consistent and strong aquafaba properties such as foam capacity and foam stability.

Example 3: Production of aquafaba from an identity preserved pulse II (Faba bean)

Aquafaba was prepared by cooking in a pressure vessel as described above with reference to FIG. 1. Aquafaba produced from faba bean has similar properties to aquafaba produces from chickpea. However, it has a stronger beany flavor and was darker in color. As it is generally desirable to produce a product without the strong flavor and an acceptable color. Where aquafaba produced from a faba bean has a strong flavor or colour it may not be acceptable for certain applications.

Example 4: Production of aquafaba from an identity preserved pulse III (low tannin faba bean)

Tannins in faba bean lead to strong flavours, off colours and decreased protein availability. Genetic materials for low tannin faba bean are commercially available. Therefore, during experimentation, the inventors prepared aquafaba from a low tannin cultivar to determine if this cultivar also produces both an edible co-product and acceptable foam. Aquafaba was prepared from a cultivar of low tannin faba bean by cooking the beans in a pressure vessel as described in example 1.

Aquafaba from low tannin faba bean has superior color and flavor properties compared to regular faba bean. Therefore, low tannin faba bean appears to have appropriate levels of polyphenolic compounds for use in aquafaba production.

Example 5: Production of aquafaba from an identity preserved pulse IV (low vicine faba bean)

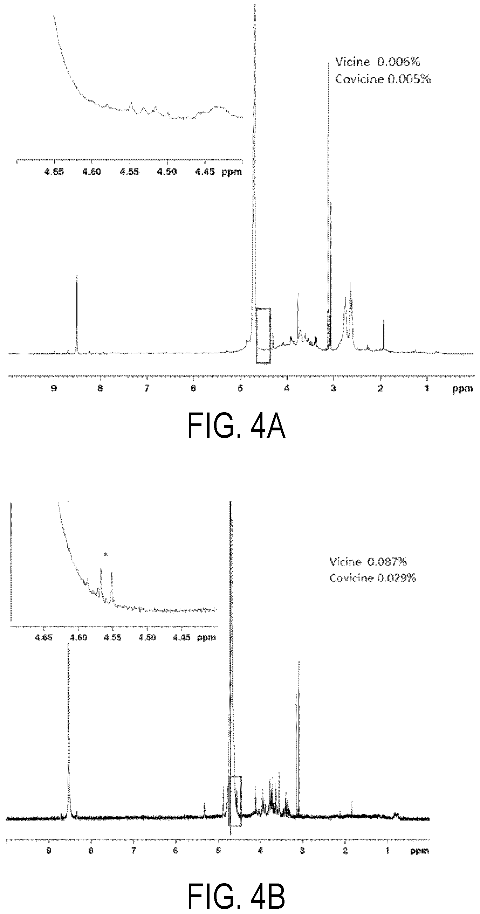

Referring to FIG. 4A and FIG. 4B, vicine and covicine are ureide compounds produced by faba bean that have low toxicity to most people but to people with a deficiency in glucose-6-phosphate dehydrogenase (a.k.a. Favism) consumption of faba bean products can lead to a life-threatening acute anemia. Selection of pulses that have depleted levels of ureides for use in aquafaba production would, therefore, be desirable.

Cultivars of faba bean with greatly reduced vicine and covicine content have been developed. These cultivars are being commercialized in Canada. Aquafaba was prepared from a cultivar of low vicine faba bean by cooking in a pressure vessel as described in example 1. A faba bean cultivar that was depleted in both vicine and covicine was tested to determine its suitability as a source of AF.

While vicine is concentrated in faba bean protein isolate, aquafaba from low vicine varieties is almost depleted in vicine, as illustrated in the spectra analysis shown in FIGS. 4A and 4B.

Example 6: Standardization of aquafaba using NMR analysis followed by blending and drying

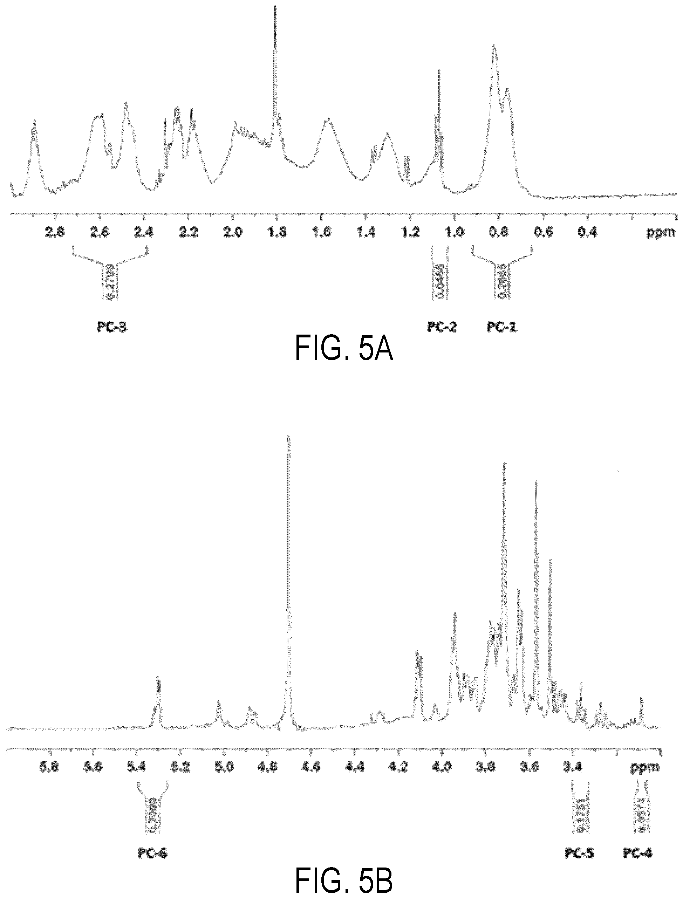

Now referring to FIGS. 5A - 5C, proton resonances from organic compounds in aquafaba were measured by $^1$H-NMR with a water suppression pulse sequence. The principle components (PC 1-8) were measured quantitatively by resonance signals at 0.62-0.9 PPM (PC-1), 1.1-1.15 PPM (PC-2), 2.38-2.72 PPM (PC-3), 3.08-3.1 PPM (PC-4), 3.37-3.40 PPM (PC-5), 5.25-5.37 PPM (PC-6), 6.6-6.9 PPM (PC-7), and 7.7-7.8 PPM (PC-8). The strong water resonance present in the spectra was suppressed using Double Pulse Field Gradient Spin Echo (DPFGSE) as provided by Bruker NMR software (Xwin-NMR; Bruker, Mississauga, ON, Canada). Samples were centrifuged (Beckman Coulter Canada Inc, Mississauga, ON, Canada) at 10,000 RPM for 10 min, and supernatant samples were filtered with 0.45 um PTFE filters (Pall Corp, Ann Arbor, MI). Finally, filtered samples (0.5mL) were added to clean NMR tubes. Deuterium oxide (50 $\mu$L, D2O, 99.8%) was mixed with each sample to provide a locking signal, 40 $\mu$L of pyrazine (C4H4N2) was added as an internal standard, and 500 $\mu$L of filtered samples were pipetted into each NMR tube. $^1$H-NMR with sixteen scans was used to record spectra, and area was determined by comparison with the internal standard resonance.

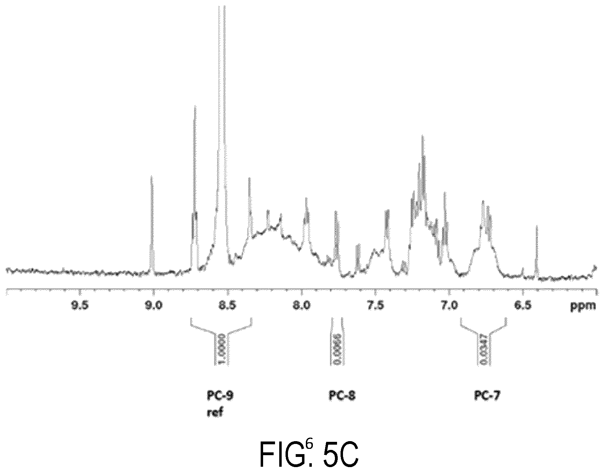

Although the $^1$H-NMR spectra shown in FIG. 5A, FIG. 5B and FIG. 5C are complex, a substantial amount of information is contained in the spectra. For example, PC-1 is a broad peak with two centers. It is probable that PC-1 is contributed by the resonance of protons in aliphatic groups present in leucine, isoleucine and valine amino acids in proteins. A sharper resonance in the spectra like PC-2 arise from the protons of ethanol. The ethanol is likely a product of seed metabolism during steeping. PC-3 is broad and complex and is likely from resonances of aspartate, methionine, and glutamine. PC-4 is a singlet and likely arises from choline containing compounds. PC-5 is a triplet that is likely related to sugars present in the sample. PC-6 is the anomeric proton of sucrose and similar sugars. PC-7 arises most likely from tyrosine in protein and phenolic compounds. While PC-8 is a resonance associated with soluble phenolic compounds.

As illustrated above, $^1$H-NMR analysis may be used to analyze aquafaba and blend different batch to achieve a standard concentration of protein. One skilled in the art would know that other analytical techniques that provide this level of detail regarding composition could also be employed to standardize the formula of aquafaba.

Example 7: Vegan egg substitute production from pulse whey 2 (Chickpea or faba bean)

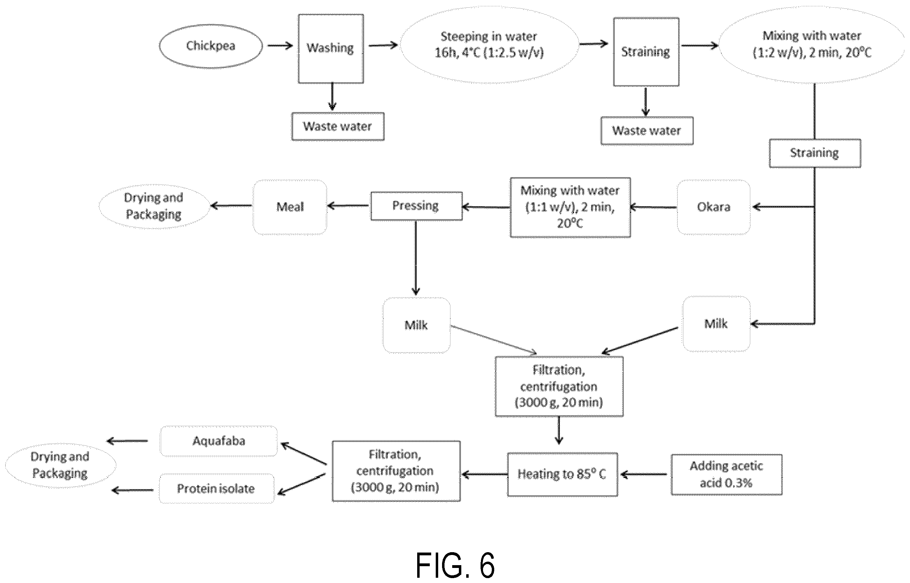

Now referring to FIG. 6, shown is another illustrative process for producing aquafaba in accordance with an embodiment.

In this illustrative example, chickpea (or faba bean) seed was submersed in water (1:2.5; w/v) and held at 4°C for 12-16 hours. After this period the seed was placed onto a screen and the water was allowed to drain. Optionally the seed may be rinsed with water before proceeding. The drained seed was then macerated with 2 volumes of water for 2 min using a blender at the highest setting. The milk was then separated from the pulp by filtration. The same procedure was repeated once more by mixing the pulp with water (about 1 volume based on pulp wet volume) and macerating the pulp again. The twice macerated slurry was filtrated and then decanted. The pulp sediment is then dried. This material can be used in food formulations as a source of fiber. The first and second milk were combined and screened in a decanter to separate the starch. The milk was boiled for 5 min and then cooled to 85 °C. Citric acid (about 0.3-0.5% of the milk weight) was added to the milk while stirring. The temperature of the solution in the container was maintained at 85 °C for 10 min to form the curd. The curd formed (protein rich fraction) was then separated from the whey. The whey is centrifuged at 3000 g for 20 min and used as a foaming and emulsifying agent (aquafaba).

Example 8: Vegan egg substitute production from pulse whey I (Chickpea or faba bean)

Chickpea (or faba bean) seed was tempered according to the methods described by Pathirtatne et al (2015). Pre-determined amount of deionized water was added to approximately 1 kg of whole chickpea (or faba bean) seed in polyethylene bags to attain the desired final moisture (AACC (2013) method 26-95.01.

$$W = [L(MoistureT - MoistureO)]/(100 - MoistureO)$$

Where,

W = Water weight required (grams)
L = seed weight (grams)
MoistureT = Moisture required at tempering (%)
MoistureO = Moisture content of seeds before tempering (%)

The bags were heat-sealed and then shaken manually for 10 seconds every 10 minutes for total 30 minutes to ensure the distribution of the water. The samples were kept at 4°C for 16 h to achieve an equilibrium final moisture content of 16%.

Tempered seeds were then infrared heat treated using a laboratory-scale micronizer (Model A 156379-B0, FMC Syntron® Bulk Handling Equipment, Homer City, PA). Tempered chickpea (or faba bean) seed were heated to a seed surface temperature of 120 to 125 °C. The micronized samples were thinly spread onto a table, allowing the seed to cool for 30 min at room temperature prior to milling.

Tempered and infrared heated chickpea (faba bean) seed were ground to pass a 1.7 mm screen using a roller mill (Apollo Machine Products, Saskatoon, SK). All milled flour samples were vacuum packaged in polyethylene plastic bags and stored away from direct heat, light, and moisture. The chickpea (or faba bean) flours were fractionated into water solubles, prime starch, and tailings starch according to the method of Czuchajowska and Pomeranz (1994).

Flour was blended with 2 volumes of water for 2 min using a blender at the highest setting. The slurry was then centrifuged at 3000 g for 20 min. The same procedure was repeated once more by mixing the pulp resulting from centrifugation with water (about 1 volume based on pulp) and reblend it. The slurry was centrifuged at 3000 g for 20 min. The pulp is dried and could be used in a food formulation as a source of fiber. The first and second chickpea (or faba bean) milk were combined and centrifuged at 3000 g for 10 min to separate the starch. The milk was boiled for 5 min and then cooled to 85 °C. Citric acid (about 0.3-0.5% of the milk weight) was added to the milk while stirring. The temperature of the solution in the container was maintained at 85 °C for 10 min to form the curd. The curd (protein rich fraction) was then separated from the whey. The whey was centrifuged at 3000 g for 20 min and used as a foaming and emulsifying agent (aquafaba).

Example 9: Vegan egg substitute production from pulse whey III (low tannin faba bean)

To reduce the off-flavors of faba bean aquafaba caused by the effect of heat on phenolics, sugars and amino acids, low tannin faba bean was used to prepare aquafaba as described in example 7. The whey produced from low tannin faba bean is lighter in color and has less flavor compared to normal faba bean.

Example 10: Vegan egg substitute production from Pulse whey IV (low vicine faba Contributions):

Pulse whey was prepared from a cultivar of low vicine faba bean by as described in example 7. A faba bean cultivar that was depleted in both vicine and covicine was tested to determine its suitability as a source of pulse whey.
While vicine is concentrated in faba bean protein isolate, pulse whey from low vicine varieties is almost depleted in vicine.

Example 11: Standardization of vegan egg substitute using NMR analysis followed by blending drying

Same as example 6

Example 12: Fortification of aquafaba from chickpea by foam separation

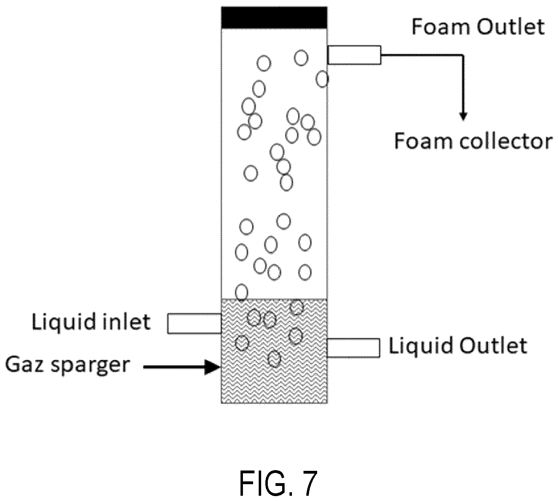

The foaming materials were separated from the whey by foam fractionating column based on protein skimmer technic (see FIG. 7 above). The parameters of sparge depth (25 cm), sparge configuration (pore size = 0.01mm), gas flow rate (variable for batch processing), gas humidity (dry), feedstock depth (30 cm), and feedstock flow rate (batch) and foam column height (1 m) were adjusted to separate the surface-active components from the water. The feedstock was diluted with best results seen at 1:4 aquafaba to water. The foam is collected and analysed by $^1$H-NMR and the fraction enriched by foaming materials is collected and dried.
FIG. 7 shows an illustrative design and construction of a foam separator in accordance with an embodiment. Selection of parameters for pilot tests: sparge position at bottom of column, feedstock depth ~30cm, column height ~4 ft., foam collection design.
Design adjustments: gas flow meter, inline gas filter, gas humidification, feedstock pH, feedstock pump with flow meter, foam collection rate calculated by mass in collection vessel. Flow rate parameters used to calculate average surface excess of the surface-active components adsorbed on the bubbles.
Technique modification: when using batch processing for fractionation, the bottoms were drained, and compressed air was used to blow the remaining foam out of the column.
Surprising results: foam fractionation did not remove large particulates from the feedstock, where foam fractionation is often used to remove such contaminants. Some whey (faba bean) demonstrated a pulsing behavior with a variable rate of foam generation, perhaps due to internal reflux and saturation of surface-active components.
It will be appreciated that the design of the foam column shown in FIG. 7 may be modified, such as the sparge design, incorporation of a reflux mechanism, and adjusting the parameters of gas and feedstock flow rates, feedstock dilution and pH, gas species and humidity, feedstock depth, the sparge position, column height, foam collector and collapsing methods.

Example 13: Fortification of aquafaba from chickpea or faba bean by foam separation

The parameters of sparge depth (25 cm), sparge configuration (pore size = 0.01mm), gas flow rate (variable for batch processing), gas humidity (dry), feedstock depth (30 cm), and feedstock flow rate (batch) and foam column height (1 m) were adjusted to separate the surface-active components from the water. The feedstock was diluted with best results seen at 1:1 faba bean whey to water.

Example 14: Fortification of vegan egg substitute from faba bean by foam separation

Same as example 12 except that faba bean was substituted for chick pea. Similar results were found for this material.

Example 15: Chickpea paste application

Chickpea cooked seed produced as described in example 1 is milled to produce a paste which can be used to make hummus. According to analysis by the Market Research Future Report, by the year 2022, the Global Hummus Market is projected to be US$1.1 billion and will grow at a CAGR of around 9.5% during the forecasted period. Optionally, the paste can be dried and milled into flour which can be used in many food applications such as animal protein replacement, extruded products, infant formula, etc. Optionally, the paste produced from cooked seed could be mixed with sugar and used as pastry filler similarly to red bean paste.

Example 16: Faba bean paste application

Same as example 15 but faba bean was substituted for chickpea. Surprisingly the faba bean baste had higher protein than the chick pea product.

Example 17: Chickpea starch application

Chickpea starch could be used as a texturing agent in many food applications. Chickpea starch has very high stability and gelatinisation temperature compared with other starches from cereal or potato (Hedley, 2017).

Example 18: Faba bean starch application

Same as example 18 but faba bean was substituted for chickpea.

Example 19: Chickpea curd application

Chickpea curd contains > 60% protein and could be used in many food applications as plant-based cheese or to increase the content of protein.

Example 20: Faba bean curd application

Chickpea curd contains > 80% protein and could be used in many food applications as plant-based cheese or to increase the content of protein.

Example 21: Chickpea and faba bean pulp application

Chickpea and faba bean pulp is are fractions rich in fiber and containing less than 10% protein. Such materials could be used to enhance cereal breakfast or be used as an ingredient in meal replacements. Optionally, it could be roasted and made in a granola form or dried and milled and used in many food applications. One skilled in the art would recognize the potential application of this material in a range of food and health food products.

Example 22: Aquafaba solid stabilization

Aquafaba made as in example 1 is stabilized by lowering water activity (spray drying or thin film drying), heating (sterilization (for example at 5.5 to 7 PSI and 110-112°C for 1 minutes); pasteurization (for examples, at 72°C for 15 seconds or 63°C for 30 minutes) or acidification with a food safe acid (citric acid, lactic acid, sorbic acid, acetic acid, tartaric acid or any acid that one skilled in the art would recognize as a suitable food safe acidulant).

Example 23. Preparation of Aquafaba Compositions from Commercially Available Brands of Chickpea.

One of the limitations for use of aquafaba has been inconsistency in product properties. Some of these issues relate to variability in the starting materials and the impact of different preparation parameters during cooking. In order to access this variability and to select superior starting materials a study was undertaken with a wide range of commercially available canned chickpeas.

*Materials:*

Canned chickpeas were obtained from ten commercial brands available in local grocers (Saskatoon, SK, Canada). All-purpose flour, sugar, apple vinegar, egg white liquid and fresh eggs were purchased from local grocers. Chickpeas were canned by the following food companies in Canada:

AGT Foods and Ingredients Inc. (Regina, SK), Arz Group Inc. (Scarborough, ON), Sobeys Inc. (Calgary, AB), Grace Foods Canada Inc. (Richmond Hill, ON), Loblaws Inc. (Cambridge, ON), Primo Foods Inc. (Toronto, ON) and Unico Inc. (Concord, ON).

*Aquafaba preparation*

Aquafaba from commercial chickpea cans (kabuli cultivars) was recovered as described by Shim et al. (2018). The chickpea cans were opened, and seed was separated from the aquafaba using a stainless-steel mesh kitchen strainer. A representative sample of aquafaba was taken for analysis of physical and functional properties, and another sample was freeze-dried for chemical analysis.

*Foaming capacity and stability*

Foaming capacity (FC) and foaming stability (FS) were determined according to Martinez et al. (2016) and Shim et al. (2018) for either fresh egg white, egg white liquid or aquafaba. Aquafaba (5 mL) or egg white (5 mL) were diluted with 10 mL water in 150 mL graduated measuring cup, and then whipped for 2 min at speed setting 5 using electric hand mixer with turbo.. Foam volumes of whipped samples were measured at time 0 (VF0) and after 30 min (VF30), and foam capacity (FC) and foam stability (FS) were calculated following equations (1) and (2), respectively.

$$\%FC = V\_F0/V\_sample \times 100 \tag{1}$$

$$\%FS = V\_F30/V\_F0 \times 100 \tag{2}$$

*Emulsion Stability*

Emulsion stability (ES) for aquafaba was measured according to Martinez et al. Aquafaba (5 mL) from different chickpea brands was homogenized with 5 mL of canola oil using a Kitchen Aid Ultra Power Mixer at speed setting 10 speed for 2 min. The emulsion formed was immediately transferred to a 10-mL graduated cylinder. The volume of the aqueous phase separated from the emulsion after 30 min was recorded. The emulsion stability was calculated using the eq 3.

$$\%ES = (V\_B - V\_A)/V\_B \times 100 \tag{3}$$

Where VB is the volume of aquafaba before homogenization (5 mL) and VA is the volume of the aqueous phase after 30 min.

*Foam and emulsion properties*

Foaming and emulsifying properties differed among the commercial brands investigated. The foaming capacity and stability ranged between 182 to 476% and 74 to 92%, respectively, and the emulsion stability varied between 60% and 80% (see Table 2 below).

Table 2

| Sample | Foam capacity (%) | Foam stability (%) | Emulsion stability (%) |
|---|---|---|---|
| A | 182.22 ± 19.25[a] | 77.20 ± 7.41[ab] | 74.00 ± 4.00[cd] |
| B | 288-39 ± 19.25[b] | 77.50 ± 4.87[ab] | 64.00 ± 2.00[a] |
| C | 420.00 ± 24.04[de] | 87.23 ± 2.09[cd] | 65.33 ± 4.16[a] |
| D (w/o salt) | 353.33 ± 11.55[e] | 74.21 ± 1.01[a] | 73.33 ± 6.11[cd] |
| E | 480.00 ± 37.71[f] | 85.16 ± 2.27[bcd] | 62.00 ± 6.00[a] |
| F | 380.00 ± 35.28[cd] | 80.87 ± 6.96[abc] | 74.00 ± 4.00[cd] |
| G | 202.22 ± 16.78[a] | 77.65 ± 6.76[ab] | 80.00 ± 2.00[d] |
| H (w/o salt) | 455.56 ± 25.24[ef] | 86.29 ± 3.21[cd] | 72.00 ± 2.00[bc] |

(continued)

| Sample | Foam capacity (%) | Foam stability (%) | Emulsion stability (%) |
|---|---|---|---|
| I | 386.67 $\pm$ 17.64[cd] | 83.85 $\pm$ 1.77[bcd] | 66.00 $\pm$ 2.00[ab] |
| J | 475.56 $\pm$ 27.76[f] | 91.61 $\pm$ 1.10[d] | 60.00 $\pm$ 0.00[a] |

Means with different superscripts along vertical line are significantly different by Duncan's multiple range test at $p < 0.05$

This wide variation in emulsion and foaming properties between different brands of chickpea is mainly due to differences in chickpea varieties, composition, canning process conditions and additives (Shim et al., 2018).

Foam stability was greatest when prepared from brands H and C, with minimal separation between the liquid and foam occurring after 30 min.

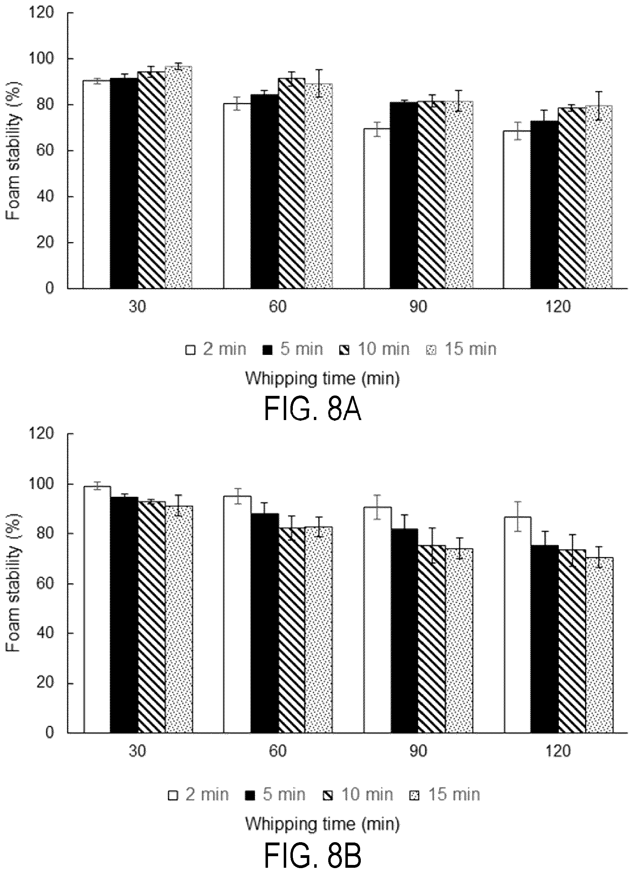

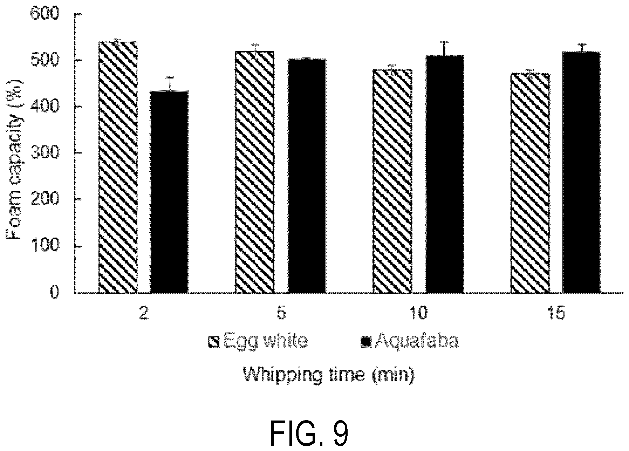

The influence of whipping time on foam stability for aquafaba and egg white was determined over 2 h (Fig. 8). Increasing whipping time from 2 to 15 min increases foam stability by 10% after 2 h of storage at room temperature (Fig. 8-a). Unlike aquafaba, egg white produced an inverse relationship, where the foam stability after 2 h decreases by 17% as a function of whipping time (Fig. 8-b). In addition, foam capacity exhibited a similar trend where increasing whipping time from 2 to 15 min resulted in increased aquafaba foam capacity (19%), while foam capacity decreased 12% in egg white foams (Fig. 9). However, no significant differences were observed between aquafaba and egg white foams after whipping for 5 and 10 min.

Aquafaba produces foams with comparable density, foam volume and foaming capacity to fresh egg white and commercial egg white liquid during whipping (see Table 3 below).

Table 3

| Sample | Liquid volume (mL) | Density (g/mL) | Foam volume (mL) | Foaming capacity (%) |
|---|---|---|---|---|
| Fresh egg white | 33 $\pm$ 0.0 | 1.02 $\pm$ 0.01 | 102.67 $\pm$ 2.52c | 311.11 $\pm$ 7.63c |
| Commercial egg white liquid | 33 $\pm$ 0.0 | 1.04 $\pm$ 0.02 | 92.67 $\pm$ 0.58a | 280.81 $\pm$ 1.75a0 |
| Aquafaba (brand H) | 33 $\pm$ 0.0 | 1.01 $\pm$ 0.01 | 98.00 $\pm$ 2.00b | 296.97 $\pm$ 6.06b |

Aquafaba or egg white contains protein of 1.5% and 10.6%, wb respectively. These proteins are surface-active agents (Mine, 1995; Shim et al., 2018). Whipping protein solutions leads to bubble formation and protein absorption at the gas-liquid interface and finally formation of protein encapsulated bubbles. The shearing force of whipping causes protein denaturation and coagulation at air cell surfaces which increases foam rigidity and stability (Arunepanlop et al., 1996). Typically, protein foaming capacity increases with time and then after maximum capacity is achieved, it decreased due to protein network breakdown (Martinez et al., 2016). In contrast to egg white, the low content of sulphur containing amino acids, cysteine and methionine, in aquafaba protein (Shim et al., 2018), mitigates the response to overheating by limiting disulphide bond formation.

*Physicochemical properties of aquafaba*

Variations were observed in the physicochemical and foaming properties of aquafaba from the ten commercial sources (see Table 4 below).

Table 4

| Brand code | Can content (g) | Chickpea fwt (g) | Seeds/ can | Juice volume (mL) | Juice density (kg/m$^3$) | Juice viscosity[1] (cP) |
|---|---|---|---|---|---|---|
| A | 588 | 392 | 454 | 170 | 1067 | 8.75 $\pm$ 0.27[bc] |
| B | 581 | 355 | 404 | 200 | 1100 | 8.34 $\pm$ 0.17[abc] |
| C | 590 | 389 | 289 | 175 | 1112 | 10.50 $\pm$ 0.18[c] |
| D | 567 | 428 | 423 | 110 | 1180 | 26.41 $\pm$ 1.14[e] |
| E | 607 | 364 | 300 | 225 | 1066 | 6.21 $\pm$ 0.24[ab] |
| F | 602 | 364 | 304 | 220 | 1048 | 6.32 $\pm$ 0.10[ab] |
| G | 598 | 349 | 280 | 220 | 1103 | 5.70 $\pm$ 0.13[a] |
| H | 595 | 488 | 429 | 125 | 1160 | 114.2 $\pm$ 4.29[f] |
| I | 599 | 385 | 323 | 200 | 1009 | 16.12 $\pm$ 0.64[d] |
| J | 584 | 335 | 244 | 220 | 1109 | 5.79 $\pm$ 0.30[a] |

(continued)

| Brand code | Can content (g) | Chickpea fwt (g) | Seeds/ can | Juice volume (mL) | Juice density (kg/m$^3$) | Juice viscosity[1] (cP) |
|---|---|---|---|---|---|---|
| Mean | 591 | 385 | 345 | 186.5 | 1095.4 | 20.84 |
| SD | 12 | 44 | 74.72 | 41.17 | 50.83 | 33.44 |
| CV[3] | 2 | 12 | 21.66 | 22.07 | 4.64 | 160.48 |

Differences in industrial canning procedures and genetic differences among cultivars used by manufacturers results in variable aquafaba compositions and foaming and emulsifying properties. Manufacturers do not specify which chickpea cultivar used in their brand. Additionally, some commercial brands include additives, such as salt and preservatives which also affect aquafaba properties.

Example 24 Aquafaba as an egg replacer in cake baking

*Sponge Cake*

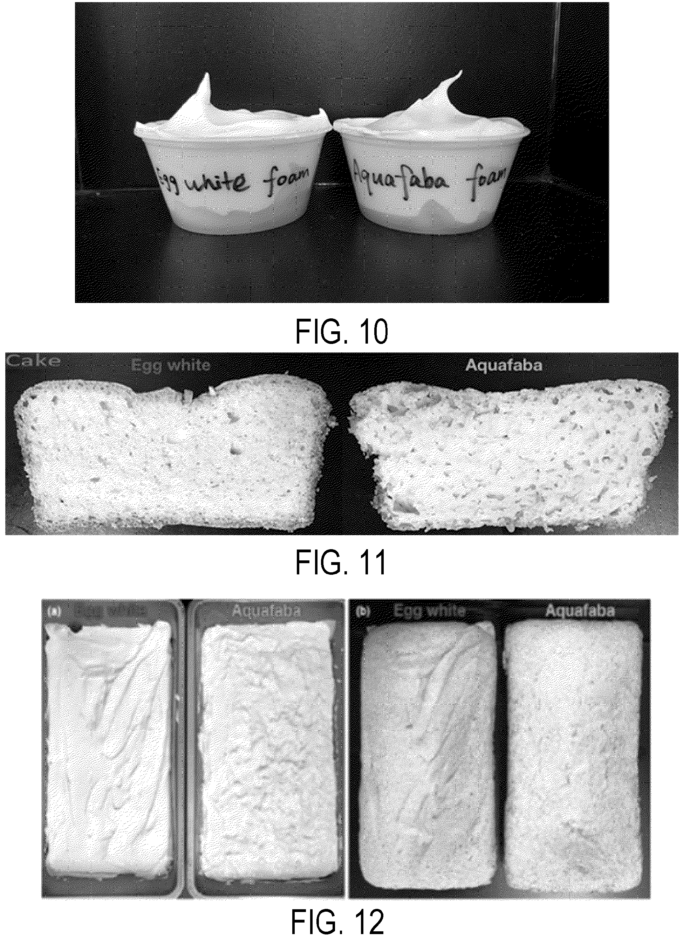

Foam was produced using a Kitchen Aid Ultra Power Mixer by whipping 110 mL of aquafaba produced from Orion chickpea or egg white (110 mL from 3 eggs) with 1 tsp (3 g) of apple vinegar, starting on a low speed setting until most of the aquafaba or egg white turned foamy and no liquid remained (Fig. 10). The speed then was increased to the maximum setting and the mixture was whipped for 7 min. While mixing at the high-speed setting, 130 g of powdered sugar was added and the creamy mixture was whipped into a stiff peak for 3 min. In a separate bowl, flour (130 g) and baking powder (7 g) were blended, and then gently folded into the foam in three aliquots using a rubber spatula. Cake batter samples were then poured into baking pans (21 9 12 cm) and baked in a preheated conventional oven at 180 °C (360 °F) for 30 min. After cooking, pans were removed from the oven and inverted on a wire rack to cool at room temperature for 30 min prior to texture and colour analysis (Fig. 11). Cooled cakes were packed in polypropylene bags and frozen for further analyses.

*Cake pH, moisture content and weight loss during baking*

Cake crumb pH was determined by mixing (10 g) ground crumb with 90 mL of distilled water and homogenising for 1 min. Mixtures were held at 4 °C for 1 h to separate solid and liquid phases and supernatant pH was measured. Cake moisture cake was determined as the difference in weight of cake samples before and after drying in an air oven at 100_2 °C for 16-18 h according to AACC method 44-19.01 (AACC, 2000). Baking loss rate (%, wet weight) was determined as the difference between the weight of the batter before and cake weight after baking and cooling to room temperature for 30 min.

Prior to baking, batter containing egg white has a glossy and flat surface while the batter prepared with aquafaba appears granular and irregular (Fig. 12-a). However, after baking, sponge cake made with aquafaba was comparable to that produced with egg white (Fig. 12-b).

Table 5

| Texture profile | Crumb | | Crust | |
|---|---|---|---|---|
| | Egg white cake | Aquafaba cake | Egg white cake | Aquafaba cake |
| Hardness (N) | 15.20 ± 1.60 | 14.20 ± 2.47 | 145.95 ± 16.90 | 148.30 ± 13.15 |
| Chewiness (%) | 49.89 ± 5.88[a] | 34.25 ± 3.01[a] | 320.63 ± 10.29[a] | 217.22 ± 19.90[a] |
| Springiness (%) | 75.87 ± 2.51[a] | 54.17 ± 10.55[a] | 45.66 ± 3.44 | 44.74 ± 3.85 |
| Cohesiveness (ratio) | 0.62 ± 0.02[a] | 0.53 ± 0.06[a] | 0.32 ± 0.00[a] | 0.24 ± 0.01[a] |
| Rosilience | 0.23 ± 0.17 | 0.21 ± 0.12 | 0.15 ± 0.01 | 0.30 ± 0.00 |

[a]Sianificant difference indicates at $P < 0.05$ by two-independent samples t-lest (line intergroup).

Texture profile analysis revealed that crumbs of both cakes were similar (Table 5), but there were significant differences in chewiness (P = 0.03), springiness (P = 0.002) and cohesiveness (P = 0.01). The aquafaba cake crumb was less fluffy and springy than crumb of egg white cake.

The crusts of both cake samples were different in chewiness (P = 0.023) and cohesiveness (P = 0.004) (Table 4). This may be a result of differences between the foam stability between aquafaba and that of egg white.

Aquafaba can be used as a replacement for egg in the production of sponge cake. Its foamability was comparable to that of egg white, additionally, the duration of whipping time played an important role in determining foam stability and foam capacity for both egg white and aquafaba. Furthermore, replacing egg white by aquafaba did not greatly affect physicochemical parameters of the sponge cake. The cake made with aquafaba was slightly less moist than cake made with egg white (21.44% and 22.18%), had less height (4.22 and 4.62 cm), lower volume index (11.13 and 12.57 cm) and lower pH (7.43 and 8.35) (Table 6). The aquafaba cake was slightly denser than egg.

Table 6

| Property | Egg white cake | Aquafaba cake | *P* value |
|---|---|---|---|
| pH | $8.35 \pm 0.19$ | $7.43 \pm 0.12$ | 0.002[a] |
| Moisture content (%, wb) | $22.18 \pm 0.18$ | $21.44 \pm 0.12$ | 0.004[a] |
| Baking weight loss (%, w/w) | $10.52 \pm 2.57$ | $11.99 \pm 3.22$ | 0.666 |
| Heig ht (cm) | $4.82 \pm 0.33$ | $4.22 \pm 0.19$ | 0.141 |
| Volume index[b] (cm) | $12.57 \pm 0.32$ | $11.13 \pm 0.32$ | 0.005[a] |

[a]Significant difference indicates at $P < 0.05$ by two-independent samples t-test.
[b]The height of the cake at the centre plus the heights of the cake sample at the points 2.5 cm away from the centre towards the left and right sides of the cake.

*Example 25 Aquafaba as an egg replacer in meringue*

*Aquafaba Meringue Recipe*

Ingredients

- 2 g of aquafaba powder and 45 mL water (or 45 mL aquafaba liquid).
- 30 g of powdered sugar
- 1 g of cream of tartar or vinegar.

Instructions

Add vanilla and cream of tartar, and aquafaba to water. Using an electric mixer, whisk the mixture for 15 minutes or until soft peaks form. Whisking constantly, gradually add sugar and whisk until the mixture is thick and firm.

Drop large spoonfuls (about two tablespoons of mixture) onto 2 baking-paper lined trays and bake in a 100°C oven for 1½-1¾ hours, until firm to touch. Cool meringues in the oven, then serve.

Example 26 Aquafaba as an egg replacer in salad dressing, dip and mayonnaise

*Mayonnaise*

Ingredients:

- 2 g of aquafaba powder and 45 mL water (or 45 ml aquafaba liquid)
- 1 tablespoon (15 mL) lemon juice (or 3 g of cream of tartar), 1 Tbsp white wine vinegar
- ¾ tsp (2.5 g) salt
- 230 ml canola for the powder and 150 mL of canola oil for the liquid.

Instructions:

1- Add all the ingredients except the oil into a bowl.

2- Blend to combine the ingredients using a high-speed blender for 1 min.

3- Slowly pour in the oil with the blender running the whole time until it thickens into a creamy mayo.

Now referring to FIG. 13 shown is a schematic block diagram of a generic computing device that may provide a suitable operating environment in one or more embodiments for the present system and method, including hosting and execution of an artificial neural network in accordance with various embodiments. A suitably configured computer device, and associated communications networks, devices, software and firmware may provide a platform for enabling one or more embodiments as described above. By way of example, FIG. 13 shows a generic computer device 1400 that may include a central processing unit ("CPU") 1402 connected to a storage unit 1404 and to a random-access memory 1406. The CPU 1402 may process an operating system 1401, application program 1403, and data 1423. The operating system 1401, application program 1403, and data 1423 may be stored in storage unit 1404 and loaded into memory 1406, as may be required. Computer device 1400 may further include a graphics processing unit (GPU) 1422 which is operatively connected to CPU 1402 and to memory 1406 to offload intensive image processing calculations from CPU 1402 and run these calculations in parallel with CPU 1402. An operator 1407 may interact with the computer device 1400 using a video display 1408 connected by a video interface 1405, and various input/output devices such as a keyboard 1410, pointer 1412, and storage 1414 connected by an I/O interface 1409. In known manner, the pointer 1412 may be configured to control movement of a cursor or pointer icon in the video display 1408, and to operate various graphical user interface (GUI) controls appearing in the video display 1408. The computer device 1400 may form part of a network via a network interface 1411, allowing the computer device 1400 to communicate with other suitably configured data processing systems or circuits. A non-transitory medium 1416 may be used to store executable code embodying one or more embodiments of the present method on the generic computing device 1400. One or more sensors 1430 may be connected to the computer device via a sensor interface 1432 to detect various operating parameters and environmental conditions. Thus, in an aspect, there is provided processes for total utilization of pulses of the genera Vicia sp., Cicer sp., Pisum sp., and Lens sp. by separating emulsifiers and/or foam stabilizers, from starch, protein and fiber rich fractions. In another aspect we have prepared preferred and consistent emulsifiers/foam stabilizers from pulses of the genera Vicia sp., Cicer sp., Pisum sp., and Lens sp. Within the production of these preferred compositions there are provided preferred compositions of seed paste, or protein, starch, and fiber.

While illustrative embodiments have been described above by way of example, it will be appreciated that various changes and modifications may be made without departing from the scope of the invention, which is defined by the following claims.

References

AACC. (2000). Methods 44-19.01 moisture-air-oven method, drying at 135°; 10-91.01 use of layer cake measuring template. In: Approved Methods of Analysis (edited by American Association of Cereal Chemists). 11th ed. St. Paul, MN: AACC International.

AACC (2013). Methods 26-95.01. Experimental milling, temper table. American Association of Cereal Chemists Inc., St. Paul, MN

Aquafaba (2016). The Official Aquafaba Website (last visited 24 March, 2019). http://aquafaba.com.

Arozarena, I., Bertholo, H., Empis, J., Bunger, A. & Sousa, I. (2001). Study of the total replacement of egg by white lupine protein, emulsifier and xanthan gum in yellow cakes. European Food Research and Technology, 213, 312-316.

Arunepanlop, B., Morr, C.V, Karleskind, D. & Laye, I. (1996). Partial replacement of egg white proteins with whey proteins in angel food cakes. Journal of Food Science, 61, 1085-1093.

Ashwini, A., Jyotsna, R. & Indrani, D. (2009). Effect of hydrocolloids and emulsifiers on the rheological, microstructural and quality characteristics of eggless cake. Food Hydrocolloids, 23, 700-707.

Chandra-Hioe, M.V, Wong, C.H.M. & Arcot, J. (2016). The potential use of fermented chickpea and faba bean flour as food ingredients. Plant Foods for Human Nutrition, 71, 90-95.

Foegeding, E.A., Luck, P.J. & Davis, J.P. (2006). Factors determining the physical properties of protein foams. Food Hydrocolloids, 20, 283-292.

Hedley, C.L. (2017). GRS44 - Chickpea Starch Structure - Function Studies - Grain Research and Development Corporation report.

Herranz, B., Canet, W., Jim_enez, M.J., Fuentes, R. & Alvarez, M.D. (2016). Characterisation of chickpea flour-based gluten-free batters and muffins with added biopolymers: rheological, physical and sensory properties. International Journal of Food Science and Technology, 51, 1087-1098.

Janssen, M., Busch, C., Röodiger M. & Hamm, U. (2016). Motives of consumers following a vegan diet and their attitudes towards animal agriculture. Appetite, 105, 643-651.

Jarpa-Parra, M., Wong, L., Wismer, W. et al. (2017). Quality characteristics of angel food cake and muffin using lentil protein as egg/milk replacer. International Journal of Food Science and Technology, 52, 1604-1613.

Kemp, A.S. (2007). Egg allergy. Pediatric Allergy and Immunology, 18, 696-702.

Kohrs, D., Herald, T.J., Aramouni, F.M. & Abughoush, M. (2010). Evaluation of egg replacers in a yellow cake system. Emirates Journal of Food and Agriculture, 22, 340-352.

Lee, C.C., Love, J.A. & Johnson, L.A. (1993). Sensory and physical properties of cakes with bovine plasma products substituted for egg. Cereal Chemistry, 70, 18-21.

Martinez, M., Stone, A.K., Yovchev, A.G., Peter, R., Vandenberg, A. & Nickerson, M.T. (2016). Effect of genotype and environment on the surface characteristics and functionality of air-classified faba bean protein concentrates. European Food Research and Technology, 242, 903-1911.

Mine, Y. (1995). Recent advances in the understanding of egg white protein functionality. Trends in Food Science and Technology, 6, 225-232.

Mustafa, R., He, Y, Shim, YY Reaney, MJT, (2018). Aquafaba, wastewater from chickpea canning, functions as an egg replacer in sponge cake. International Journal of Food Science and Technology 53, 2247-2255.

Mustafa, R. & Reaney, MJT, (2019). Aquafaba, from food waste to a value-added product. In "Food wastes and by-products": nutraceutical & health potential", Campos-Vega, R. Oomah, B. D., Vergara-Castañeda, H., A. John Wiley & Sons Ltd, New York.

Myhara, R.M. & Kruger, G. (1998). The performance of decolorised bovine plasma protein as a replacement for egg white in high ratio white cakes. Food Quality and Preference, 9, 135-138.

Rachwa-Rosiak, D., Nebesny, E. & Budryn, G. (2015). Chickpeas composition, nutritional value, health benefits, application to bread and snacks: A review. Critical Reviews in Food Science and Nutrition, 55, 1137-1145.

Raeker, M.€ O. & Johnson, L.A. (1995). Cake-baking (high-ratio white layer) properties of egg white, bovine blood plasma, and their protein fractions. Cereal Chemistry, 72, 299-303.

Rahmati, N.F. & Tehrani, M.M. (2014). Replacement of egg in cake: effect of soy milk on quality and sensory characteristics. Journal of Food Processing and Preservation, 39, 574-582.

Sadahira, M.S., Rodrigues, M.I., Akhtar, M., Murray, B.S. & Netto, F.M. (2016). Effect of egg white protein-pectin electrostatic interactions in a high sugar content system on foaming and foam rheological properties. Food Hydrocolloids, 58, 1-10.

Sadahira, M.S., Rodrigues, M.I., Akhtar, M., Murray, B.S. & Netto, F.M. (2018). Influence of pH on foaming and rheological properties of aerated high sugar system with egg white protein and hydroxypropylmethylcellulose. LWT-Food Science and Technology, 89, 350-357.

Shao, Y, Lin, K. & Chen, Y. (2015). Batter and product quality of eggless cakes made of different types of flours and gums. Journal of Food Processing and Preservation, 39, 2959-2968.

Shim, YY., Mustafa, R., Shen, J., Ratanapariyanuch, K. & Reaney, M.J.T. (2018). Composition and properties of aquafaba: water recovered from commercially canned chickpeas. Journal of Visualized Experiments, 132(e56305), 1-14.

Stadelman, W. & Schmeider, H. (2002). Functional uses of eggs: An overview. In: Eggs and Health Promotion. (edited by R.R. Watson) pp. 3-8 Ames, IA: Iowa State University Press.

Stantiall, S.E., Dale, K.J., Calizo, F.S. & Serventi, L. (2018). Application of pulses cooking water as functional ingredients: the foaming and gelling abilities. European Food Research and Technology, 244, 97-104.

Tan, M.C., Chin, N.L.K., Yusof, Y.A., Taip, F.S. & Abdullah, J. (2015). Improvement of eggless cake structure using ultrasonically treated whey protein. Food and Bioprocess Technology, 8, 605-614.

Xu, Y, Obielodan, M., Sismour, E., Arnett, A., Alzahrani, S. & Zhang, B. (2017). Physicochemical, functional, thermal and structural properties of isolated Kabuli chickpea proteins as affected by processing approaches. International Journal of Food Science and Technology, 52, 1147-1154.

Perry, R.H., Green, D. W. (1997) Adsorptive Bubble Separation. Perry's Chemical Engineer's Handbook, 7th ed., 22-30 - 22-35

Green, A. J., Littlejohn, K. A., Hooley, P., Cox, P. W. (2013) Formation and stability of food foams and aerated emulsions: Hydrophobins as novel functional ingredients.

Current Opinion in Colloid & Interface Science, 18, 4, 292 - 301.

Santana, C. C., Du, L., Tanner, R. D. (2011) Downstream Processing of Proteins Using Foam Fractionation in Biotechnology, edited by Doelle, H. W., Rokem, J. S., Berovic, M., in Encyclopedia of Life Support Systems (EOLSS), Developed under the Auspices of the UNESCO, Eolss Publishers, Paris, France, [http://www.eolss.net]

Stevenson, P., Li, X., (2017) "Foam Fractionation: Principles and Process Design." CRC Press, Boca Raton.

## Claims

1. A method of producing a standardized aquafaba composition, comprising:

   steeping an identity preserved pulse cultivar for a predetermined time at a predetermined temperature;
   wet heat treating the steeped seed for a predetermined time at a predetermined temperature and pressure; and
   separating the liquid (aquafaba) from the seed and concentrated for use as a foaming and emulsifying agent.

2. A method of producing a standardized aquafaba and whey composition, comprising:

   steeping an identity preserved pulse cultivar for a predetermined time at a predetermined temperature;
   blending the steeped identity preserved pulse cultivar with a liquid base to produce a slurry;
   centrifuging the slurry to produce a milk and an okara pulp;
   boiling the milk and cooling to a predetermined temperature to form a curd and whey; and
   separating the whey from the curd for use as a foaming and emulsifying agent.

3. The method according to claim 2, further comprising:

   producing an aquafaba foam from the identity preserved pulse cultivar whey;
   measuring a foam capacity and a foam stability of the aquafaba foam produced from the identity preserved pulse cultivar whey; and
   comparing the measured foam capacity and foam stability of the aquafaba foam to a reference standard to determine suitability of the identity preserved pulse cultivar for a given aquafaba use.

4. The method according to any one of claims 2 or 3, further comprising determining the germplasm of the identity preserved pulse cultivar for identifying other pulse cultivars within a genus with similar properties.

5. The method according to any one of claims 2 to 4 further comprising conducting spectroscopic testing of the identity preserved pulse cultivar.

6. The method according to claim 5, wherein the spectroscopic testing comprises NMR spectra testing for undesirable compounds.

7. The method according to claim 6, wherein the undesirable compounds are vicine and covicine.

8. The method according to any one claims 5 to 7, wherein the spectroscopic testing comprises NMR spectral analysis for determining protein concentrations.

9. The method according to claim 8, further comprising utilizing the spectral analysis to blend the whey of two or more identity preserved pulse cultivars to achieve a standard concentration of protein.

10. A standardized aquafaba and whey composition produced from the method according to any one of claims 1 to 9.

EP 3 788 885 A1

FIG. 1

FIG. 2A

FIG. 2B

FIG. 3

Vicine  0.006%
Covicine 0.005%

FIG. 4A

Vicine  0.087%
Covicine 0.029%

FIG. 4B

FIG. 5A

FIG. 5B

PC-9
ref

PC-8

PC-7

FIG. 5C

FIG. 6

**FIG. 7**

FIG. 8A

FIG. 8B

FIG. 9

FIG. 10

FIG. 11

FIG. 12

FIG. 13

Europäisches
Patentamt

European
Patent Office

Office européen
des brevets

## EUROPEAN SEARCH REPORT

Application Number

EP 20 19 4056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 567 719 A (ALTERNATIVE FOODS LONDON LTD [GB]) 24 April 2019 (2019-04-24) * paragraphs [0004], [0005], [0030], [0031] * | 1,10 | INV. A23J1/14 A23L11/00 A23L11/40 A23L15/00 |
| Y | DE 10 2007 015219 A1 (WESTFALIA SEPARATOR AG [DE]) 4 October 2007 (2007-10-04) * paragraph [0045] - paragraph [0048] * | 2-9 | |
| Y | CHUA JIAN-YONG ET AL: "Soy whey: More than just wastewater from tofu and soy protein isolate industry", TRENDS IN FOOD SCIENCE AND TECHNOLOGY, ELSEVIER SCIENCE PUBLISHERS, GB, vol. 91, 28 June 2019 (2019-06-28), pages 24-32, XP085782905, ISSN: 0924-2244, DOI: 10.1016/J.TIFS.2019.06.016 [retrieved on 2019-06-28] * page 27, column 1, paragraph 5 * | 2 | |
| Y | Johanna Söderberg: "Functional properties of legume proteins compared to egg proteins and their potential as egg replacers in vegan food", , 31 December 2013 (2013-12-31), XP055765435, Retrieved from the Internet: URL:https://stud.epsilon.slu.se/6240/7/soderberg_j_131101.pdf [retrieved on 2021-01-15] * abstract * | 3 | TECHNICAL FIELDS SEARCHED (IPC) A23J A23L A23C G01N |

-/--

The present search report has been drawn up for all claims

| Place of search | Date of completion of the search | Examiner |
|---|---|---|
| Munich | 21 January 2021 | Czerny, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 20 19 4056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Egbert Strobel: "Antinutritive Pflanzeninhaltsstoffe sowie Pflanzenteile und Pflanzen mit antinutritiven Substanzen; Vicin - Convicin", 630 Agriculture, 9 September 2006 (2006-09-09), pages 231-234, XP055765450, Retrieved from the Internet: URL:https://literatur.thuenen.de/digbib_extern/bitv/zi040855.pdf [retrieved on 2021-01-15] | 4 | |
| A | * the whole document * | 7 | |
| Y,D | US 2019/200662 A1 (BAREWAL REVA [US] ET AL) 4 July 2019 (2019-07-04) * paragraph [0014] * | 5 | |
| Y | M. PAVLÍK ET AL: "Fungitoxicity of natural heterocycle glucoside vicine obtained from Vicia faba L. against selectedmicroscopic filamentous fungi", PLANT, SOIL AND ENVIRONMENT, vol. 48, no. No. 12, 22 December 2011 (2011-12-22), pages 543-547, XP055765467, ISSN: 1214-1178, DOI: 10.17221/4410-PSE * abstract * | 6,7 | |
| Y | YOUN YOUNG SHIM ET AL: "Composition and Properties of Aquafaba: Water Recovered from Commercially Canned Chickpeas", JOURNAL OF VISUALIZED EXPERIMENTS, no. 132, 10 February 2018 (2018-02-10), XP055766865, DOI: 10.3791/56305 | 8,9 | TECHNICAL FIELDS SEARCHED (IPC) |
| A | * Discussion * | 1-7,10 | |

-/--

The present search report has been drawn up for all claims

| Place of search | Date of completion of the search | Examiner |
|---|---|---|
| Munich | 21 January 2021 | Czerny, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 20 19 4056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Amanda Eller: "Should you consider growing identity preserved specialty crops?", FBN Grain Marketing , 18 October 2018 (2018-10-18), XP002801651, Retrieved from the Internet: URL:https://emergence.fbn.com/profitability/should-you-consider-growing-identity-preserved-crops [retrieved on 2021-01-12] * the whole document * ----- | 1-5,9 | |
| A,D | RANA MUSTAFA ET AL: "Aquafaba, wastewater from chickpea canning, functions as an egg replacer in sponge cake", INTERNATIONAL JOURNAL OF FOOD SCIENCE AND TECHNOLOGY., vol. 53, no. 10, 7 May 2018 (2018-05-07), pages 2247-2255, XP055637406, GB ISSN: 0950-5423, DOI: 10.1111/ijfs.13813 * the whole document * ----- | 1-10 | |

**TECHNICAL FIELDS SEARCHED (IPC)**

The present search report has been drawn up for all claims

| Place of search | Date of completion of the search | Examiner |
|---|---|---|
| Munich | 21 January 2021 | Czerny, M |

EPO FORM 1503 03.82 (P04C01)

## ANNEX TO THE EUROPEAN SEARCH REPORT
## ON EUROPEAN PATENT APPLICATION NO.

EP 20 19 4056

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2021

| Patent document cited in search report | | Publication date | Patent family member(s) | | Publication date |
|---|---|---|---|---|---|
| GB 2567719 | A | 24-04-2019 | GB | 2567719 A | 24-04-2019 |
| | | | US | 2020046001 A1 | 13-02-2020 |
| | | | WO | 2020030819 A1 | 13-02-2020 |
| DE 102007015219 A1 | | 04-10-2007 | NONE | | |
| US 2019200662 | A1 | 04-07-2019 | CA | 3087625 A1 | 11-07-2019 |
| | | | EP | 3735138 A1 | 11-11-2020 |
| | | | US | 2019200662 A1 | 04-07-2019 |
| | | | WO | 2019136104 A1 | 11-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3864500 A
- US 4103038 A
- US 4029825 A
- US 4267100 A
- US 4072764 A
- US 4214010 A
- US 4293574 A
- US 4302474 A
- US 4360537 A
- US 4409248 A
- US 5718940 A
- US 6878394 B

- US 7442400 B
- US 8287930 B
- US 10321705 B
- US 20140193565 A1
- US 20140356507 A1
- US 20160309732 A1, Gugger
- US 20180042278 A1, Brahimsha
- US 20180303105 A1, Desjardins-Lavisse
- US 20190045807 A1, Shah
- US 20190200662 A1, Barewal
- US 3669883 A
- US 5484525 A

### Non-patent literature cited in the description

- Methods 44-19.01 moisture-air-oven method, drying at 135°; 10-91.01 use of layer cake measuring template. **AACC.** Approved Methods of Analysis. MN: AACC International, 2000
- **AACC.** Methods 26-95.01. Experimental milling, temper table. American Association of Cereal Chemists Inc, 2013
- **AQUAFABA.** *The Official Aquafaba Website (last visited 24 March, 2019),* 2016, http://aquafaba.com
- **AROZARENA, I. ; BERTHOLO, H. ; EMPIS, J. ; BUNGER, A. ; SOUSA, I.** Study of the total replacement of egg by white lupine protein, emulsifier and xanthan gum in yellow cakes. *European Food Research and Technology,* 2001, vol. 213, 312-316
- **ARUNEPANLOP, B. ; MORR, C.V ; KARLESKIND, D. ; LAYE, I.** Partial replacement of egg white proteins with whey proteins in angel food cakes. *Journal of Food Science,* 1996, vol. 61, 1085-1093
- **ASHWINI, A. ; JYOTSNA, R. ; INDRANI, D.** Effect of hydrocolloids and emulsifiers on the rheological, microstructural and quality characteristics of eggless cake. *Food Hydrocolloids,* 2009, vol. 23, 700-707
- **CHANDRA-HIOE, M.V ; WONG, C.H.M. ; ARCOT, J.** The potential use of fermented chickpea and faba bean flour as food ingredients. *Plant Foods for Human Nutrition,* 2016, vol. 71, 90-95
- **FOEGEDING, E.A. ; LUCK, P.J. ; DAVIS, J.P.** Factors determining the physical properties of protein foams. *Food Hydrocolloids,* 2006, vol. 20, 283-292

- **HEDLEY, C.L.** *GRS44 - Chickpea Starch Structure - Function Studies - Grain Research and Development Corporation report,* 2017
- **HERRANZ, B. ; CANET, W. ; JIM_ENEZ, M.J. ; FUENTES, R. ; ALVAREZ, M.D.** Characterisation of chickpea flour-based gluten-free batters and muffins with added biopolymers: rheological, physical and sensory properties. *International Journal of Food Science and Technology,* 2016, vol. 51, 1087-1098
- **JANSSEN, M. ; BUSCH, C. ; RÖODIGER M. ; HAMM, U.** Motives of consumers following a vegan diet and their attitudes towards animal agriculture. *Appetite,* 2016, vol. 105, 643-651
- **JARPA-PARRA, M. ; WONG, L. ; WISMER, W. et al.** Quality characteristics of angel food cake and muffin using lentil protein as egg/milk replacer. *International Journal of Food Science and Technology,* 2017, vol. 52, 1604-1613
- **KEMP, A.S.** Egg allergy. *Pediatric Allergy and Immunology,* 2007, vol. 18, 696-702
- **KOHRS, D. ; HERALD, T.J. ; ARAMOUNI, F.M. ; ABUGHOUSH, M.** Evaluation of egg replacers in a yellow cake system. *Emirates Journal of Food and Agriculture,* 2010, vol. 22, 340-352
- **LEE, C.C. ; LOVE, J.A. ; JOHNSON, L.A.** Sensory and physical properties of cakes with bovine plasma products substituted for egg. *Cereal Chemistry,* 1993, vol. 70, 18-21

- **MARTINEZ, M. ; STONE, A.K. ; YOVCHEV, A.G. ; PETER, R. ; VANDENBERG, A. ; NICKERSON, M.T.** Effect of genotype and environment on the surface characteristics and functionality of air-classified faba bean protein concentrates. *European Food Research and Technology,* 2016, vol. 242, 903-1911
- **MINE, Y.** Recent advances in the understanding of egg white protein functionality. *Trends in Food Science and Technology,* 1995, vol. 6, 225-232
- **MUSTAFA, R. ; HE, Y ; SHIM, YY ; REANEY, MJT.** Aquafaba, wastewater from chickpea canning, functions as an egg replacer in sponge cake. *International Journal of Food Science and Technology,* 2018, vol. 53, 2247-2255
- Aquafaba, from food waste to a value-added product. **MUSTAFA, R. ; REANEY, MJT.** Food wastes and by-products": nutraceutical & health potential. John Wiley & Sons Ltd, 2019
- **MYHARA, R.M. ; KRUGER, G.** The performance of decolorised bovine plasma protein as a replacement for egg white in high ratio white cakes. *Food Quality and Preference,* 1998, vol. 9, 135-138
- **RACHWA-ROSIAK, D. ; NEBESNY, E. ; BUDRYN, G.** Chickpeas composition, nutritional value, health benefits, application to bread and snacks: A review. *Critical Reviews in Food Science and Nutrition,* 2015, vol. 55, 1137-1145
- **RAEKER, M.€ O. ; JOHNSON, L.A.** Cake-baking (high-ratio white layer) properties of egg white, bovine blood plasma, and their protein fractions. *Cereal Chemistry,* 1995, vol. 72, 299-303
- **RAHMATI, N.F. ; TEHRANI, M.M.** Replacement of egg in cake: effect of soy milk on quality and sensory characteristics. *Journal of Food Processing and Preservation,* 2014, vol. 39, 574-582
- **SADAHIRA, M.S. ; RODRIGUES, M.I. ; AKHTAR, M. ; MURRAY, B.S. ; NETTO, F.M.** Effect of egg white protein-pectin electrostatic interactions in a high sugar content system on foaming and foam rheological properties. *Food Hydrocolloids,* 2016, vol. 58, 1-10
- **SADAHIRA, M.S. ; RODRIGUES, M.I. ; AKHTAR, M. ; MURRAY, B.S. ; NETTO, F.M.** Influence of pH on foaming and rheological properties of aerated high sugar system with egg white protein and hydroxypropylmethylcellulose. *LWT-Food Science and Technology,* 2018, vol. 89, 350-357
- **SHAO, Y ; LIN, K. ; CHEN, Y.** Batter and product quality of eggless cakes made of different types of flours and gums. *Journal of Food Processing and Preservation,* 2015, vol. 39, 2959-2968
- **SHIM, YY. ; MUSTAFA, R. ; SHEN, J. ; RATANAPARIYANUCH, K. ; REANEY, M.J.T.** Composition and properties of aquafaba: water recovered from commercially canned chickpeas. *Journal of Visualized Experiments,* 2018, vol. 132 (e56305), 1-14
- Functional uses of eggs: An overview. **STADELMAN, W. ; SCHMEIDER, H.** Eggs and Health Promotion. Iowa State University Press, 2002, 3-8
- **STANTIALL, S.E. ; DALE, K.J. ; CALIZO, F.S. ; SERVENTI, L.** Application of pulses cooking water as functional ingredients: the foaming and gelling abilities. *European Food Research and Technology,* 2018, vol. 244, 97-104
- **TAN, M.C. ; CHIN, N.L.K. ; YUSOF, Y.A. ; TAIP, F.S. ; ABDULLAH, J.** Improvement of eggless cake structure using ultrasonically treated whey protein. *Food and Bioprocess Technology,* 2015, vol. 8, 605-614
- **XU, Y ; OBIELODAN, M. ; SISMOUR, E. ; ARNETT, A. ; ALZAHRANI, S. ; ZHANG, B.** Physicochemical, functional, thermal and structural properties of isolated Kabuli chickpea proteins as affected by processing approaches. *International Journal of Food Science and Technology,* 2017, vol. 52, 1147-1154
- Adsorptive Bubble Separation. **PERRY, R.H. ; GREEN, D. W.** Perry's Chemical Engineer's Handbook. 1997, 22-30, 22-35
- **GREEN, A. J. ; LITTLEJOHN, K. A. ; HOOLEY, P. ; COX, P. W.** *Formation and stability of food foams and aerated emulsions: Hydrophobins as novel functional ingredients,* 2013
- *Current Opinion in Colloid & Interface Science,* vol. 18 (4), 292-301
- Downstream Processing of Proteins Using Foam Fractionation in Biotechnology. **SANTANA, C. C. ; DU, L. ; TANNER, R. D.** Encyclopedia of Life Support Systems (EOLSS), Developed under the Auspices of the UNESCO. Eolss Publishers, 2011
- **STEVENSON, P. ; LI, X.** Foam Fractionation: Principles and Process Design. CRC Press, 2017